# EUROPEAN PATENT APPLICATION

(11) **EP 4 556 898 A1**
(43) Date of publication of application: **21.05.2025**
(21) Application number: 23210149.3
(22) Date of filing: 15.11.2023
(51) Int. Cl.: G01N 23/20008

(54) **THIN FILM X-RAY ANALYSIS APPARATUS**

(71) Applicant: Malvern Panalytical B.V., 7602 EA Almelo (NL)
(72) Inventor: Gortemaker, Christopher, 7600 Almelo (NL)
(74) Representative: Elkington and Fife LLP

(57) **Abstract**

The present invention relates to a thin film X-ray analysis apparatus for analysing a sample. The apparatus comprises a first roller and a second roller which form a film plane along which a film passes. The apparatus further comprises an X-ray source for irradiating a sample and a detector configured to detect X-rays. The X-ray source is configured, in operation, to project X-rays to a work area between the first and second rollers. The apparatus further comprises an enclosure comprising a first part having a first opening and a second part having a second opening, the first part being arranged on a first side of the film plane opposite to the X-ray source, the second part being on the second side of the film plane, the same side as the X-ray source and moveable between a first position and a second position, wherein, in the first position the enclosure encloses at least the first roller, the second roller, the X-ray source and the detector.

## Description

### FIELD OF THE INVENTION

The present invention relates to an apparatus and method for X-ray analysis. In particular, embodiments relate to an X-ray analysis apparatus of thin films.

### BACKGROUND

X-ray analysis methods can be used to characterise materials. Thin film X-ray analysis is a technique used to study the atomic and molecular structure of materials, in particular crystalline materials. A thin film of the material to be inspected is prepared and then irradiated with X-rays and resulting signals then detected. Generally, two forms of signals can be detected and these detection methods are known as X-ray diffraction or X-ray fluorescence. In X-ray diffraction, the material scatters the X-rays and results in a diffraction pattern which is detected and can then be analysed to determine information about the crystal structure. In X-ray diffraction a detector is positioned at a location to which diffracted X-rays will be directed i.e. on the same side of the thin film as the X-ray source. In X-ray fluorescence, the material emits characteristic fluorescent X-rays which are then detected. In fluorescence a detector may be positioned on the other side of the film from the X-ray source.

Information which can be determined from the detected X-rays include material content, the spacing between crystal planes, the orientation of crystal planes, information about the unit cell and other lattice parameters. This analysis can be used to study layers of materials, investigate changes in crystal structure, for example under different conditions.

In industrial applications, thin film X-ray analysis is a non-destructive method of identifying defects, determining material thickness and assessing the content and properties of a material. In particular, it can be used in the quality control of materials to ensure that the material fulfils specific quality criteria. It can also be used to detect defects, cracks or inconsistencies in materials.

Thin film X-ray analysis is also used to determine the thickness and uniformity of layers such as in the production of photovoltaic cells. Finally, thin film X-ray analysis can be used to analyse the structural properties and composition of materials such as semiconductors and other advanced materials used in electronic applications.

Roll-to-roll X-ray is a thin film X-ray analysis method which involves the continuous X-ray inspection of materials on a roll of thin film. This is particularly useful in scenarios in which quality control and non-destructive testing are essential and examples of these include flexible electronics and membranes. Roll-to-roll X-ray analysis ensures the quality and consistency of the materials being processed without interrupting the production line.

One particular industrial application of roll-to-roll X-ray analysis methods and apparatus is in the production of catalyst-coated polymer electrolyte membranes in fuel cells. The electrocatalysts are capital intensive and inconsistent application, for example too much or too little of the active element, either wastes valuable resources or renders the catalyst ineffective. Careful monitoring of the material results in higher quality products and improved cost control.

The use of roll-to-roll X-ray analysis in scenarios such as the manufacture of membranes in fuel cells allows real-time monitoring of the materials for enhanced process control. The regular analysis means that material composition and loading are continually optimised which minimises off-specification production and maximises cost efficiencies.

In a roll-to-roll X-ray apparatus the thin film must initially be loaded into the apparatus. Furthermore, it may be necessary to access the apparatus for maintenance. However, doors are relatively small and it can therefore be difficult to access the thin film, or other parts, within a roll-to-roll X-ray analysis apparatus.

Accordingly, there is a need to provide an improved thin film X-ray analysis apparatus that allows easier access to the working parts of the apparatus.

### SUMMARY

According to an aspect of the invention, there is provided a thin film X-ray analysis apparatus comprising:
a first roller;
a second roller, the first roller and the second roller forming a film plane along which a thin film passes;
an X-ray source for irradiating a sample with X-rays and configured, in operation, to project X-rays to a work area between the first and second rollers;
a detector configured to detect X-rays;
an enclosure comprising a first part having a first opening and a second part having a second opening, the first part being arranged on a first side of the film plane opposite to the X-ray source, the second part being on the second side of the film plane, the same side as the X-ray source and moveable between a first position and a second position, wherein, in the first position the enclosure encloses at least the first roller, the second roller, the X-ray source and the detector.

This arrangement allows the thin film to pass between the first and second parts of the enclosure. The enclosure contains radiation but yet is splittable which enables the thin film and working parts to be accessed easily. By having a splittable, openable enclosure a less complex path for the thin film is required. It therefore reduces the path the thin film takes through the system, resulting in a lower number of rollers. This in turn reduces the total inertia required to get the thin film moving through the system.

The enclosure is thus formed by a first part with an opening and a second part with an opening. The first opening of the first part and the second opening of the second part are generally arranged opposite each other and have a small gap therebetween. This allows the thin film, or web, to pass from outside the enclosure, into the enclosure. Thus, the enclosure contains the X-rays but the thin film, or web can pass into and out of the enclosure. Advantageously, according to the invention the enclosure can easily be opened and then closed.

The detector detects scattered radiation, which includes both diffracted or emitted (fluorescent) X-rays. Depending on the specific application, the detector can be arranged to detect either diffracted X-rays (i.e. on the second side of the film plane) or transmitted X-rays (i.e. on the first side of the film plane).

The thin film may be a thin film, a thin layer, a thin sheet or any thin material which can be transported around the rollers and on which X-ray analysis can be performed. The thin film is generally deposited on a substrate, which is flexible to be passed around and between the rollers. Thin film analysis is performed on thin layers, generally within the range 1nm to 1µm and the thin film is preferably within this range.

The second part may be moveable manually, or alternatively electronically controlled. It may be controlled automatically or by user control.

When the second part is in the first position the X-rays are confined whereas in the second position the X-rays are not confined. To prevent the dangerous transmission of X-rays there may be a controller which prevents the X-ray source from operating while the second part is not in the first position.

In one embodiment, the first opening and the second opening may be the same approximate size and shape. By matching (or closely matching) the size and shape of the first and second openings, the first and second parts can provide a closer fit together (while allowing the thin film to pass between the first and second parts). The first opening and the second opening may be directly opposite each other in a direction perpendicular to the film plane.

In an alternative embodiment, the first and second openings may be different sizes. For example, the first opening of the first part may be smaller than the second opening of the second part and, in the first position the opening of the first part is within the second part. In other words, the cross-sectional area of the first opening is smaller than the cross-sectional area of the second opening. Equally, the second opening of the second part may be smaller than the first opening of the first part and, in the first position the opening of the second part may be within the first part.

The second part may be movable by horizontal translation along a plane parallel to the film plane or by vertical translation along a plane perpendicular to the film plane. This enables the second part to be moved away from the work area. Alternatively, it may be moveable by a combination of horizontal and vertical translation.

The second position is preferably a minimum of 20cm away from the work area to allow sufficient space for the work area to be easily accessed.

The apparatus may further comprise a grating positioned within the first part of the enclosure and in the path of the X-rays. The grating scatters radiation to prevent it being reflected back to the detector.

The apparatus may further comprise a third roller and a fourth roller and wherein there is a maximum gap between the opening of the second part and each of the third and fourth rollers of 50mm and a maximum gap between the opening of the first part and each of the third and fourth rollers of 50mm. Alternatively, in the first position, the first and second openings are preferably a maximum of 50mm from each other. In both these arrangements the two openings are close to each other to prevent X-rays from escaping from the enclosure.

In addition to the second part being moveable, the first part may also be movable between a first position forming the enclosure and a second position, a minimum distance of 40mm away from the first position. Again, this can allow an operator easier access to the work area.

The enclosure is preferably made of metal, in particular a metal through which X-rays cannot pass, as this provides an effective barrier to the X-rays. However, any material which provides a barrier to the X-rays may be utilised.

In some embodiments, the X-ray source may form part of the second part, thereby enclosing the X-ray source within the enclosure.

The apparatus may further comprise a thin film arranged along the film plane between the first and second rollers. The material to be studied is deposited on the thin film, which is then extended across the first and second rollers so that the material on the film can be irradiated and examined.

According to the invention a thin film X-ray analysis system is disclosed. The thin film X-ray analysis system comprises a first thin film X-ray analysis apparatus, as described above, and further comprises a second thin film X-ray analysis apparatus, as described above. The first and second thin film analysis apparatus are arranged to pass a single thin film from the second roller of the first thin film X-ray analysis apparatus, in a direction perpendicular to the length of the second roller, to the first roller of the second thin film analysis apparatus.

Thus, the thin film can be passed between the first apparatus and the second apparatus, and inspection of different parts along the width of the thin film can be carried out independently. Movement of one of the X-ray sources and/or detectors does not affect the other X-ray source and/or detector, so measurement using one apparatus can be carried out even while the other X-ray source and/or detector is being moved.

The X-ray source of the first thin film X-ray analysis apparatus may be positioned at a first position along the longitudinal length relative to the first roller of the first thin film X-ray analysis apparatus and the X-ray source of the second thin film X-ray analysis apparatus is positioned at a second position along the longitudinal length relative to the first roller of the second thin film X-ray analysis apparatus.

According to the invention there is provided a thin film X-ray analysis system comprising a first thin film X-ray analysis apparatus and a second thin film X-ray analysis apparatus, wherein each of the first and second thin film X-ray analysis apparatus comprises:
a first roller;
a second roller, the first roller and the second roller forming a film plane along which a thin film passes;
an X-ray source for irradiating a sample with X-rays and configured, in operation to project X-rays to a work area between the first and second rollers; and
a detector configured to detect X-rays;
wherein the second thin film X-ray analysis apparatus is located adjacent to the first thin film X-ray analysis apparatus such that a thin film can pass, in a direction perpendicular to the length of the rollers of the first thin film X-ray apparatus to the second thin film X-ray analysis apparatus.

According to the invention there is provided a method of conducting thin film X-ray analysis. The method comprises providing a thin film X-ray analysis apparatus, the apparatus comprising: a first roller and a second roller, the first roller and the second roller forming a film plane along which a thin film passes; an X-ray source for irradiating a sample with X-rays and configured, in operation, to project X-rays to a work area between the first and second rollers; a detector configured to detect X-rays; and an enclosure comprising a first part having a first opening and a second part having a second opening, the first part being arranged on a first side of the film plane opposite to the X-ray source, the second part being on the second side of the film plane, the same side as the X-ray source. The method further comprises moving the second part between a first position in which the enclosure encloses at least the first roller, the second roller, the X-ray source and the detector and a second position away from the first position.

### BRIEF DESCRIPTION OF THE DRAWINGS

Embodiments of the present invention will now be described, by way of example, with reference to the accompanying drawings, in which:
Figure 1a is a schematic diagram illustrating a roll-to-roll X-ray analysis apparatus according to the prior art;
Figure 1b depicts an alternative roll-to-roll X-ray analysis apparatus according to the prior art;
Figure 2a is a schematic diagram illustrating an X-ray analysis apparatus according to an embodiment of the invention in a first position;
Figure 2b is a schematic diagram illustrating an X-ray analysis apparatus according to an embodiment of the invention in a second position;
Figure 3a is a schematic diagram illustrating an X-ray analysis apparatus according to an embodiment of the invention in a first position;
Figure 3b is a schematic diagram illustrating an X-ray analysis apparatus according to an embodiment of the invention in a second position (horizontally translated second part);
Figure 4 is a schematic diagram illustrating an X-ray analysis apparatus according to another embodiment of the invention;
Figure 5 is a schematic diagram illustrating an X-ray analysis apparatus according to another embodiment of the invention;
Figure 6a is a schematic diagram illustrating an X-ray analysis apparatus according to an embodiment of the invention in a first position;
Figure 6b is a schematic diagram illustrating an X-ray analysis apparatus according to an embodiment of the invention in a second position;
Figure 7 is a schematic diagram illustrating a portion of an X-ray analysis apparatus according to another embodiment of the invention;
Figure 8a is a schematic diagram illustrating an X-ray analysis apparatus according to an embodiment of the invention in a first position;
Figures 8b and 8c are schematic diagrams illustrating an X-ray analysis apparatus according to an embodiment of the invention in a second position;
Figure 9 is a schematic diagram illustrating a portion of an X-ray analysis apparatus according to another embodiment of the invention;
Figure 10 is a schematic diagram illustrating a portion of an X-ray analysis apparatus according to another embodiment of the invention;
Figure 11 is a schematic diagram illustrating a portion of an X-ray analysis apparatus according to another embodiment of the invention;
Figure 12 is a schematic diagram illustrating a portion of an X-ray analysis apparatus according to another embodiment of the invention;
Figure 13a is a side view illustrating an X-ray analysis system according to another embodiment of the invention; and
Figure 13b is a plan view of the apparatus depicted in Figure 13a.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

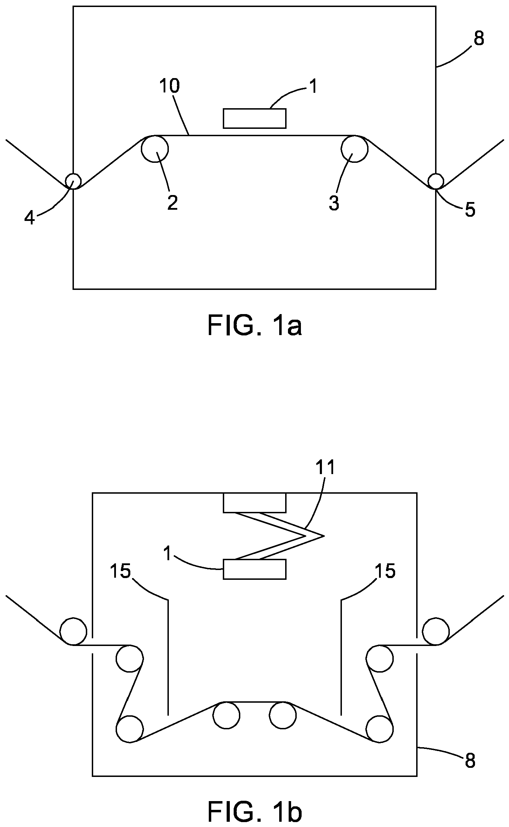

Figure 1 depicts a prior art roll-to-roll X-ray apparatus. As can be seen there is a thin film 10 which is extended across a first roller 2, a second roller 3, a third roller 4 and a fourth roller 5. The rollers can facilitate movement of the thin film 10 which is driven by a roller elsewhere. Alternatively, one or more of the rollers may be driving rollers which drive the thin film.

The apparatus comprises an X-ray source 1, which generates X-rays. The X-ray source includes a cathode and an anode enclosed in a sealed housing. In use, the cathode emits an electron beam which is incident on a target surface of the anode, thereby irradiating an irradiated area of the anode.

The anode is configured to emit X-rays. The housing includes a window arranged to allow some X-rays emitted by the anode to exit the housing as a beam of X-rays. The X-ray source may further comprise an X-ray optic arranged to receive X-rays from the X-ray source.

The top side of the rollers 2 and 3 form a film plane, along which the film passes. The width of the thin film 10 passes along the length of the rollers 2, 3. X-rays emitted by the source 1 are incident upon a work area of the thin film within the film plane. At the thin film the X-rays are scattered and/or reflected by and/or transmitted through the sample material (thin film). The scattered and/or reflected X-rays are then detected by a detector. The detected results can be analysed to determine, for example, the thickness of, or inconsistencies in, the material deposited on the thin film, any defect in the material, etc. The detector may be part of a single unit with the X-ray source.

The X-rays may operate continuously to obtain data about the sample continuously or they may operate periodically to obtain information from, for example, each distinct manufactured unit.

The X-ray source and the rollers are located in a housing 8, which serves to contain the X-rays. The thin film enters through a thin slit on one side of the housing and exits through a thin slit on the opposite side of the housing. The housing may have a door which can (when not in operation) be opened in order to arrange the thin film initially. However, this is cumbersome and difficult.

Figure 1b depicts an alternative prior art apparatus. As can be seen there are a plurality of rollers, around and/or over which the thin film passes. The plurality of rollers can serve to keep the thin film taut. In this example, the X-ray source 1 is arranged at the end of an articulated arm 11. On each side is a door 15 which slide vertically upwards to open. These doors constrain the X-rays but, as can be seen, the door is relatively small and accessing the various parts of the inside of the housing can be difficult and time consuming.

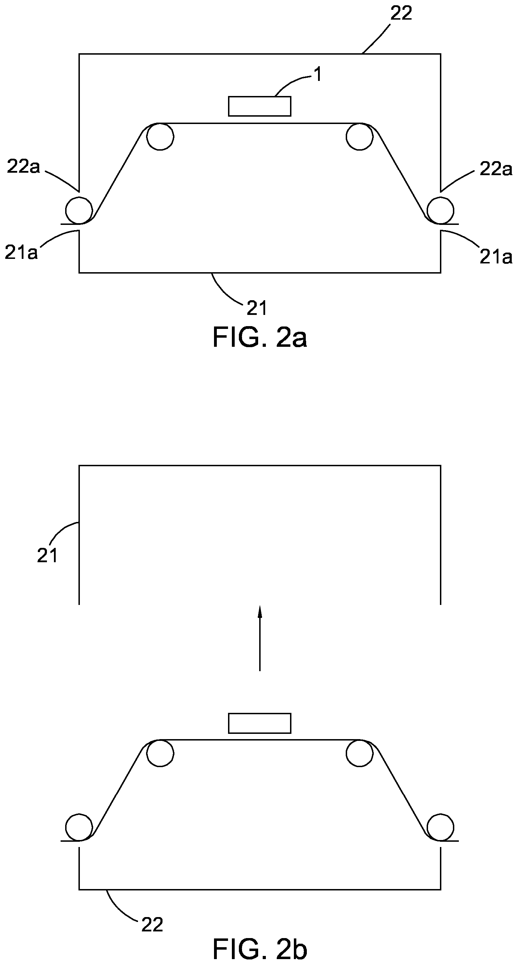

Figure 2a depicts an apparatus according to an embodiment of the invention with an enclosure formed of two parts: a first part 21 and a second part 22. The enclosure encloses the first and second rollers, the X-ray source and the detector and therefore forms an enclosed space in which radiation is contained. In Figures 2-11 the X-ray source and the detector are depicted as a single unit 1. However, they may be separate units Although the X-ray source and detector are, in this example, depicted on the same side of the thin film (for X-ray diffraction) they could equally be positioned on opposite sides of the thin film (e.g. for X-ray fluorescence).

The first part and the second part are both made of metal, in particular a metal which does not allow X-rays to pass. However, as will be appreciated by those skilled in the art, any material which provides a barrier to the X-rays may be utilised.

The first part has an opening 21a (also referred to as the first opening) and the second part has an opening 22a (also referred to as the second opening). The opening of the first part and the opening of the second part are shown in this embodiment having the same size and shape and are therefore complementary. In the example of Figure 2a the opening 21a of the first part and the opening 22a of the second part are both adjacent to the third and fourth rollers. There is preferably a maximum distance between the opening of the first part and each of the third and fourth rollers of 50mm. There is preferably a maximum distance between the opening of the second part and each of the third and fourth rollers of 50mm.

In Figure 2a the second part is in a first position, namely forming an enclosure with the first part. Figure 2b depicts a second position for the second part in which it is away from the work area and the work area can therefore be accessed. In the second position the second part is preferably a minimum of 20cm from the work area. In the example of Figure 2b the second part has been moved vertically.

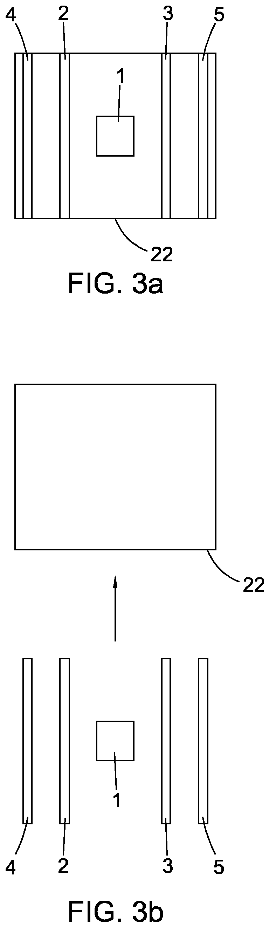

Figure 3a depicts a plan view of an embodiment of the invention and the arrangement is similar to that depicted in Figure 2a. However, 3b depicts the second part in a second position after a horizontal translation. Again, the work area is exposed for easy access.

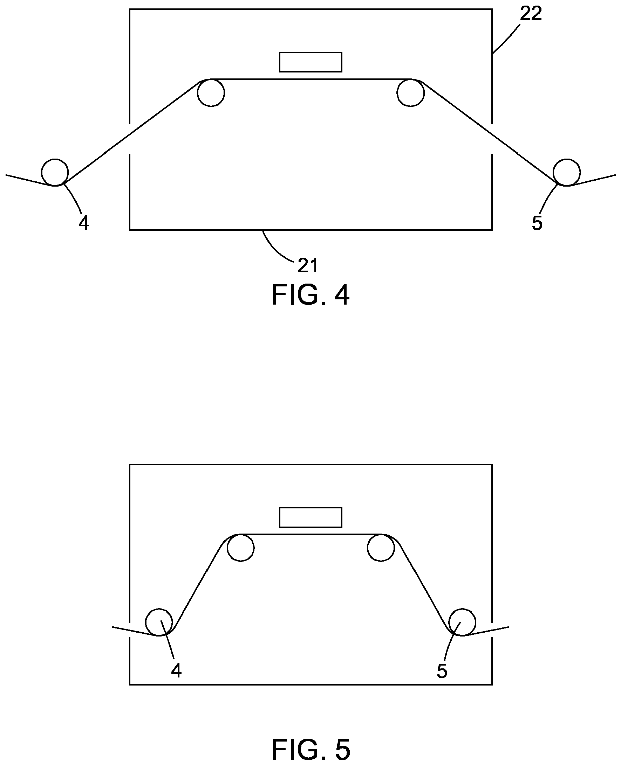

Figure 4 depicts an alternative embodiment in which the opening of the first part 21 and the opening of the second part 22 are not adjacent to the third and fourth rollers but rather are directly opposite each other. In this embodiment the third 4 and fourth 5 rollers are outside the enclosure formed by the first and second parts. However, Figure 5 depicts an alternative arrangement in which the third and fourth rollers (4 and 5, respectively) are inside the enclosure.

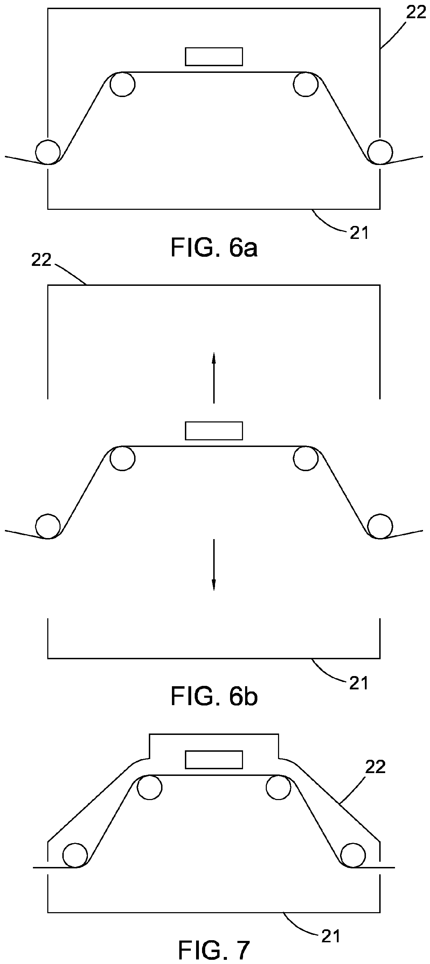

Figures 6a and 6b depict an embodiment in which both the second 22 and first 21 parts are moveable. In the depicted embodiment the first part is moved vertically. However, the first part could equally be moved horizontally.

Figures 2 to 6 depict first and second parts with rectangular cross sections. However, the first and second parts need not have rectangular cross sections and Figure 7 depicts a second part 22 which more closely conforms to the path of the thin film.

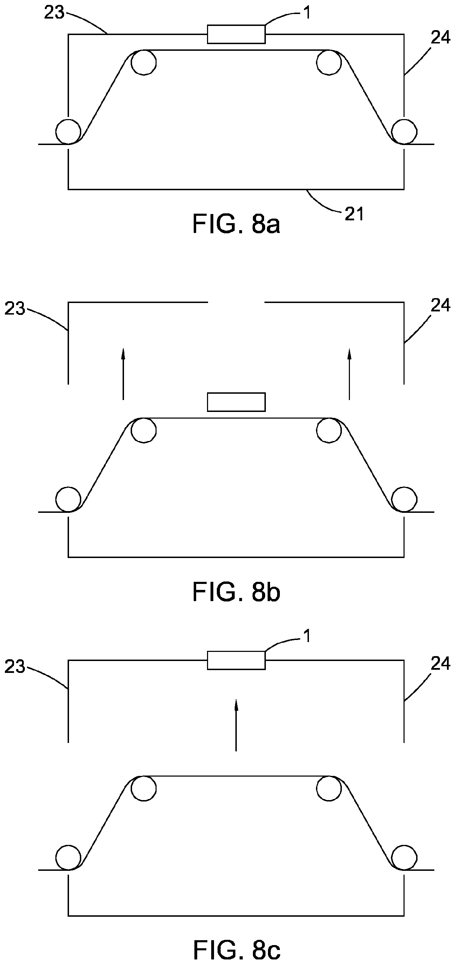

Figure 8 depicts an alternative embodiment in which the second part is formed of two sub-parts: a first sub-part 23 and a second sub-part 24. In this embodiment the X-ray source 1 forms part of the enclosure (although it will be appreciated by those skilled in the art that it need not form part of the enclosure). Figure 8a depicts a first position of the second part, with the X-ray source 1, the first part 21, the first sub-part 23 and the second sub-part 24 forming the enclosure. Figure 8b depicts the second part in a second position, with first sub-part 23 and second sub-part 24 shown moved away from the work area. Figure 8c depicts a further arrangement in which the X-ray source is also moved away from the work area.

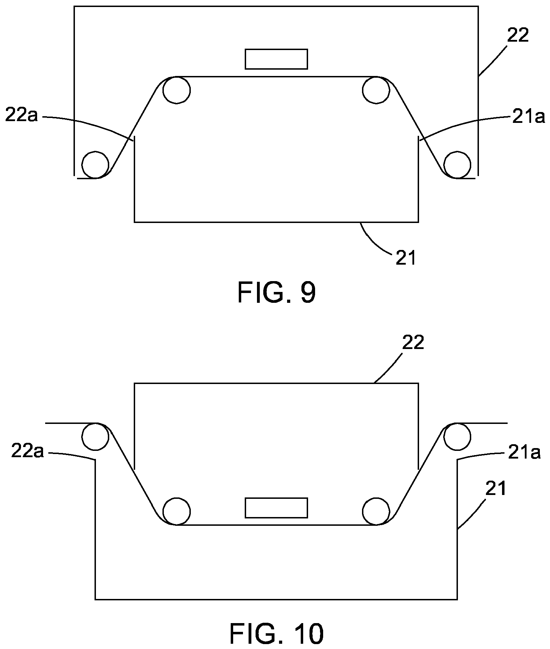

Figures 9 and 10 depict alternative embodiments in which the openings of the first and second parts are different sizes. In particular, in Figure 9 the opening 21a of the first part is smaller than the opening 22a of the second part. In the first position the opening of the first part is within the second part. This also helps to contain the X-rays. In Figure 10, the opening of the second part is smaller than the opening of the first part. In the first position the opening of the second part is within the first part.

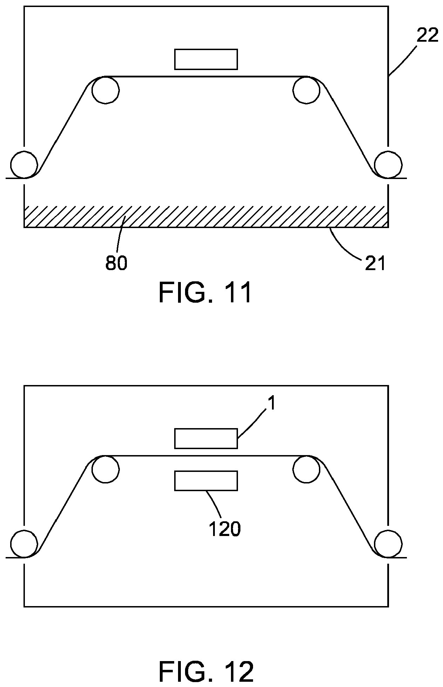

Figure 11 depicts an embodiment with a grating 80 arranged within the first part 21. The metal grating scatters radiation to prevent it from being reflected directly back to the detector and therefore compromising the collected data.

Figures 1-11 depict analysis apparatus used to detect diffracted X-rays i.e. with the detector on the same side of the thin film as the X-ray source. The X-rays are reflected from the thin film and then detected by the detector. Figures 1-11 could also be used to detect fluorescent X-rays. Figure 12 depicts an analysis apparatus used in X-ray fluorescence (but not diffraction) i.e. in a transmissive mode. Here, the detector 120 is on the opposite side of the thin film plane to the X-ray source 1 and X-rays which are transmitted through the thin film are detected. As will be appreciated, this arrangement of the X-ray source 1 and detector 120 could be incorporated into any of the arrangements of Figures 2-11 and 13.

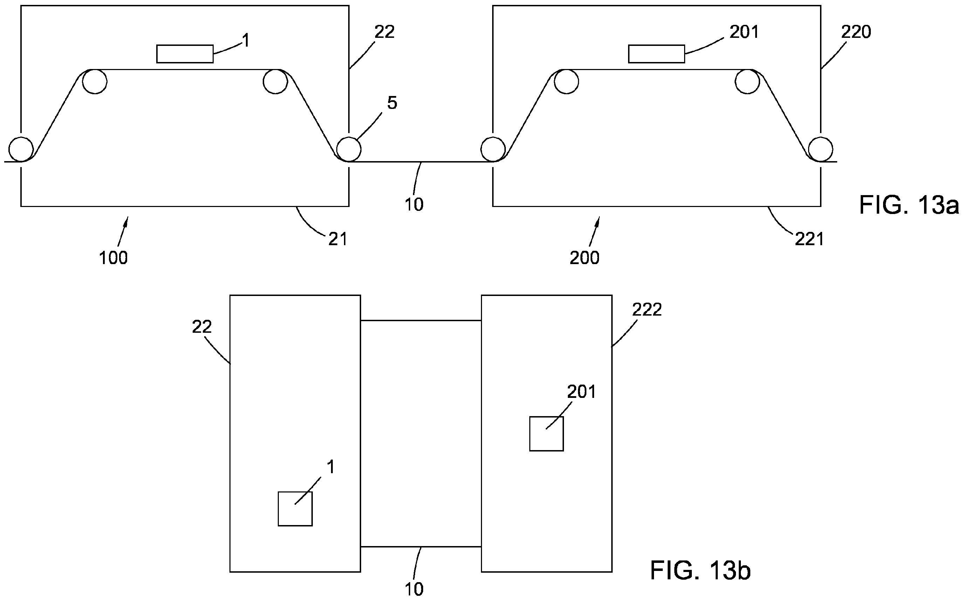

Figure 13a depicts a side view of a system with a first X-ray analysis apparatus 100 and a second X-ray analysis apparatus 200 arranged adjacent to each other. Each of the X-ray analysis apparatuses has an X-ray source 1, 201, a first part 21, 221 and a second part 22, 222. The rollers 5 and 205 are parallel to each other and overlap for at least a portion of, and preferably all of their length. As can be seen, the thin film 10 is passed directly from the first apparatus 100 to the second apparatus 200. The thin film passes perpendicularly to the length of the rollers 5, 205 between the two apparatuses. Although the two apparatuses are depicted at the same vertical height it will be appreciated that they could equally be at different heights. Although the first apparatus 100 and the second apparatus 200 are depicted as identical they could be different arrangements. As an example, the first apparatus could be a diffraction apparatus with the detector on the same side as the X-ray source whereas the second apparatus could be a transmissive apparatus with the detector on the opposite side of the thin film to the X-ray source.

Figure 13b depicts a plan view of portions of the system depicted in Figure 13a. The thin film 10 passes between the first apparatus 100 and the second apparatus 200. The X-ray source (and detector) 1 of the first apparatus is at a first position along the length of the apparatus, or rollers, whereas the X-ray source (and detector) 201 of the second apparatus is at a second, different, position along the length of the apparatus, or rollers. This allows different portions along the width of the thin film to be examined. The two detectors 1, 201 may perform the same measurement on different portions of the film or alternatively could perform different measurements. Advantageously, by positioning the X-ray sources and detectors in different units they can be moved without any vibrations affecting the other X-ray source/detector. Thus, the sources and detectors are more independent from each other.

Although Figure 13 depicts two apparatus adjacent to each other there could be more apparatus, with a single thin film being passed between all the apparatus.

As will be appreciated, features from different embodiments can be combined so, for example, the grating depicted in Figure 11 can be combined with other depicted embodiments and the movement(s) described in conjunction with various embodiments can be combined with other embodiments.
"and/or" where used herein is to be taken as specific disclosure of each of the two specified features or components with or without the other. For example "A and/or B" is to be taken as specific disclosure of each of (i) A, (ii) B and (iii) A and B, just as if each is set out individually herein.

Unless context dictates otherwise, the descriptions and definitions of the features set out above are not limited to any particular aspect or embodiment of the invention and apply equally to all aspects and embodiments which are described.

It will further be appreciated by those skilled in the art that although the invention has been described by way of example with reference to several embodiments, it is not limited to the disclosed embodiments and that alternative embodiments could be constructed without departing from the scope of the invention as defined in the appended claims.

## Claims

1. A thin film X-ray analysis apparatus comprising:
a first roller;
a second roller, the first roller and the second roller forming a film plane along which a thin film passes;
an X-ray source for irradiating a sample with X-rays and configured, in operation, to project X-rays to a work area between the first and second rollers;
a detector configured to detect X-rays;
an enclosure comprising a first part having a first opening and a second part having a second opening, the first part being arranged on a first side of the film plane opposite to the X-ray source, the second part being on the second side of the film plane, the same side as the X-ray source and moveable between a first position and a second position, wherein, in the first position the enclosure encloses at least the first roller, the second roller, the X-ray source and the detector.

2. The thin film X-ray analysis apparatus according to claim 1 wherein the first opening and the second opening are the same size and shape.

3. The thin film X-ray analysis apparatus according to claim 2 wherein, in the first position, the first opening and the second opening are directly opposite each other in a direction perpendicular to the film plane.

4. The thin film X-ray analysis apparatus according to claim 1 wherein the first opening is smaller than the second opening or wherein the second opening is smaller than the first opening.

5. The thin film X-ray analysis apparatus according to any one of the preceding claims, the second part being movable by horizontal translation along a plane parallel to the film plane.

6. The thin film X-ray analysis apparatus according to any one of the preceding claims wherein the second part is movable by vertical translation along a plane perpendicular to the film plane.

7. The thin film X-ray analysis apparatus wherein the second position is a minimum of 20cm away from the work area.

8. The thin film X-ray analysis apparatus according to any one of the preceding claims wherein, in the first position, the first and second openings are a maximum of 50mm from each other.

9. The thin film X-ray analysis apparatus according to any one of the preceding claims further comprising a third roller and a fourth roller and wherein there is a maximum gap between the second opening and each of the third and fourth rollers of 50mm and a maximum gap between the first opening and each of the third and fourth rollers of 50mm.

10. The thin film X-ray analysis apparatus according to any one of the preceding claims wherein the first part is movable between a first position forming the enclosure and a second position, a minimum distance of 40mm away from the first position.

11. The thin film X-ray analysis apparatus according to any one of the preceding claims wherein the enclosure is made of metal.

12. The thin film X-ray analysis apparatus according to any one of the preceding claims wherein the X-ray source forms part of the second part, thereby enclosing the X-ray source within the enclosure.

13. A thin film X-ray analysis system comprising:
a first thin film X-ray analysis apparatus according to any one of the preceding claims; and
a second thin film X-ray analysis apparatus according to any one of the preceding claims,
the first and second thin film analysis apparatus being arranged to pass a single thin film from the second roller of the first thin film X-ray analysis apparatus, in a direction perpendicular to the length of the second roller, to the first roller of the second thin film analysis apparatus.

14. A thin film X-ray analysis system according to claim 13 wherein the X-ray source of the first thin film X-ray analysis apparatus is positioned at a first position along the longitudinal length relative to the first roller of the first thin film X-ray analysis apparatus and the X-ray source of the second thin film X-ray analysis apparatus is positioned at a second position along the longitudinal length relative to the first roller of the second thin film X-ray analysis apparatus.

15. A thin film X-ray analysis system comprising a first thin film X-ray analysis apparatus and a second thin film X-ray analysis apparatus, wherein each of the first and second thin film X-ray analysis apparatus comprises:
a first roller;
a second roller, the first roller and the second roller forming a film plane along which a thin film passes;
an X-ray source for irradiating a sample with X-rays and configured, in operation to project X-rays to a work area between the first and second rollers;
a detector configured to detect X-rays;
wherein the second thin film X-ray analysis apparatus is located adjacent to the first thin film X-ray analysis apparatus such that a thin film can pass, in a direction perpendicular to the length of the rollers of the first thin film X-ray apparatus to the second thin film X-ray analysis apparatus.
